# EUROPÄISCHE PATENTSCHRIFT

(11) **EP 0 931 978 B1**
(45) Veröffentlichungstag und Bekanntmachung des Hinweises auf die Patenterteilung: **03.12.2003**
(21) Anmeldenummer: 98810027.7
(22) Anmeldetag: 21.01.1998
(51) Int. Cl.: F22D 1/12, F01K 23/10

(54) **Verfahren zur Vermeidung von Dampfbildung in einem Zwangsumlaufdampferzeuger**
Process for preventing steaming in a forced circulation steam generator
Méthode pour éviter la vaporisation dans un générateur de vapeur à circulation forcée

(43) Veröffentlichungstag der Anmeldung: 28.07.1999
(73) Patentinhaber: ALSTOM (Switzerland) Ltd, 5401 Baden (CH)
(72) Erfinder: Kuske, Ralf, 79862 Höchenschwand (DE); Liebig, Erhard, Dr., 79725 Laufenburg (DE)

(56) Entgegenhaltungen:
- DE-A- 2 821 397
- PATENT ABSTRACTS OF JAPAN vol. 017, no. 701 (M-1533), 21.Dezember 1993 & JP 05 240402 A (BABCOCK HITACHI KK), 17.September 1993,
- PATENT ABSTRACTS OF JAPAN vol. 016, no. 519 (M-1330), 26.Oktober 1992 & JP 04 191405 A (TOSHIBA CORP), 9.Juli 1992,

## Beschreibung

### Technisches Gebiet

Die Erfindung betrifft ein Verfahren zum Betreiben eines Abhitzedampferzeugers einer kombinierten Gas-Dampf-Kraftwerksanlage mit einem Gasturbinenkreislauf und einem Dampfturbinenkreislauf, bei welcher Anlage die Abgase einer Gasturbine ihre Restwärme über das im Dampferzeuger strömende Arbeitsmittel, welches über eine Speisepumpe gefördert wird, an eine Dampfturbine abgeben, und wobei der Dampferzeuger mindestens einen Economiser und einen Verdampfer aufweist.

### Stand der Technik

Der Wasserdampfkreislauf der derzeitigen Kombianlagen wird ausnahmslos mit unterkritischen Parametern gefahren. Der Abhitzekessel zur Nutzung der Abwärme der Gasturbinen wird in der Regel mit Trommelkessel, mit Zwangdurchlaufkessel oder mit Kombinationen davon ausgeführt. Bei grossen hocheffizienten Anlagen gelangen zum Teil Mehrdruckanlagen mit Zwischenüberhitzung zur Anwendung. Gegenüber konventionell gefeuerten Kesseln ist indes die Rauchgastemperatur bei Abhitzekesseln begrenzt. Insbesondere die Verdampfung, welche bei konstanter Temperatur vor sich geht, führt zu thermodynamischen und technischen Auslegungszwängen. Die Lösung gemäss JP 05240402 zur Vermeidung von Dampfbildung im Economiser beruht darauf, den durch die Speisepumpe geförderten Speisewassermassenstrom durch ein nachgeschaltetes Ventil zu regeln. Durch eine Öffnungs- oder Schliessbewegung des Ventils wird der Massenstrom beeinflusst und damit der Druck im stromaufwärtigen Economiser variiert. Durch eine entsprechende Einstellung des Schliessgrads des Ventils wird dabei der Druck im Economiser stets auf einem Wert oberhalb des Sättigungsdrucks gehalten. Nachteilig an dieser Lösung ist, dass durch das Zusammenwirken der nicht drehzahlgeregelten Pumpe und des nachgeschalteten Durchsatzregelventils der Massenstrom sich stets nur in Abhängigkeit des Druckes verändem lässt und umgekehrt. Massenstrom und Druck sind somit nicht unabhängig voneinander einstellbar. Ein höherer Druck wird nach dieser Anordnung also durch eine Verringerung des Massenstroms erkauft.
Darüber hinaus wirkt sich die zusätzliche Erzeugung eines Druckverlusts durch die Ventile mindernd auf die Leistung und den Wirkungsgrad der Anlage aus.

### Darstellung der Erfindung

Der Erfindung liegt die Aufgabe zugrunde, ein Verfahren der eingangs genannten Art zu schaffen, welches die Dampfbildung im Economiser durch eine Druckerhöhung oberhalb des Sättigungsdrucks verhindert.

Erfindungsgemäss wird dies durch ein Verfahren mit den im Patentanspruch aufgeführten Merkmalen erreicht.

Die mit dieser Massnahme einhergehenden Vorteile sind insbesondere in einer Verringerung der thermodynamischen und technischen Auslegungszwänge durch eine Erhöhung der Flexibilität in der Fahrweise der Anlage zu sehen, da Druck und Massenstrom in weiten Bereichen unabhängig voneinander geregelt werden können. Ferner werden die Leistungsverluste vermindert.

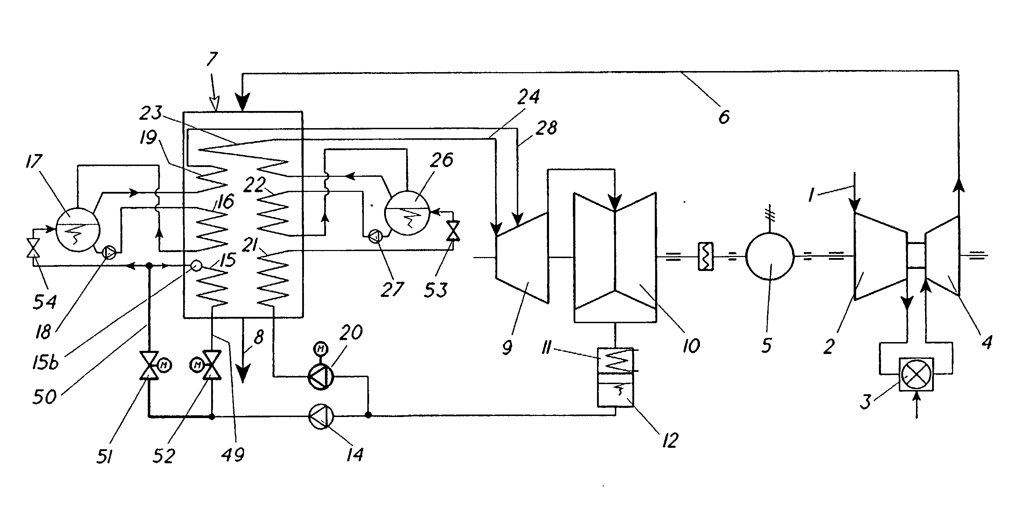

### Kurze Beschreibung der Zeichnung

In der Zeichnung sind zwei Ausführungsbeispiele der Erfindung schematisch anhand einer kombinierten Gas-Dampf-Kraftwerksanlage dargestellt. Es sind nur die für das Verständnis der Erfindung wesentlichen Elemente gezeigt. Die Strömungsrichtung der Arbeitsmittel ist mit Pfeilen dargestellt.

### Weg zur Ausführung der Erfindung

Gemäss der einzigen Figur wird im Gasturbinensystem über eine Leitung 1 angesaugte Frischluft in einem Verdichter 2 auf den Arbeitsdruck verdichtet. Die verdichtete Luft wird in einer beispielsweise mit Erdgas befeuerten Brennkammer 3 stark erhitzt und das so entstandene Brenngas wird in einer Gasturbine 4 arbeitsleistend entspannt. Die dabei gewonnene Energie wird an einen Generator 5 bzw. den Verdichter 2 abgegeben. Das noch heisse Abgas der Gasturbine wird über eine Leitung 6 vom Ausgang der Gasturbine einer Abhitzedampferzeugungsanlage 7 zugeführt und daraus nach Abgabe seiner Wärme über eine Leitung 8 und einen nicht dargestellten Kamin ins Freie geleitet.

Im Wasser-Dampfkreislauf ist eine mehrgehäusige Dampfturbine 9, 10 auf der gleichen Welle mit der Gasturbine angeordnet. Der in der Niederdruckturbine 10 entspannte Arbeitsdampf kondensiert in einem Kondensator 11. Das Kondensat wird aus dem Hotwell 12 mittels Pumpe 14, 20 direkt in den Dampferzeuger 7 gefördert. Bemerkenswert ist, dass die Anlage weder mit einer Kondensatreinigungsanlage noch mit einem in der Regel dampfbeheizten Speisewasserbehälter/Entgaser ausgerüstet ist.

Die Abhitzedampferzeugungsanlage 7 ist als stehender Kessel ausgeführt und arbeitet im vorliegenden Fall nach einem Zweidruck-Dampfprozess. Selbstverständlich könnte auch ein liegender Kessel zur Anwendung gelangen. Ebenso ist die Anzahl der Druckstufen sowie die Anordnung und Reihenfolge der einzelnen Heizflächen im Beispielsfall ohne Belang. Es sei ebenfalls auf die Tendenz hingewiesen, bei stehendem Kessel Zwangsumlaufsysteme und bei liegendem Kessel Naturumlaufsysteme zu verwenden.

Das Niederdrucksystem und das Hochdrucksystem sind hier als Umlaufsystem mit Trommel ausgeführt, wobei jeweils ein Zwangsumlaufsystem gewählt worden ist. Beide Systeme bestehen im Rauchgasweg des Kessels aus einem Niederdruckeconomiser 15 resp. einem Hochdruckeconomiser 21, in die das Kondensat über je eine Speisepumpe 14, 20 eingeleitet wird, einem Niederdruckverdampfer 16 resp. einem Hochdruckverdampfer 22 sowie einem Niederdrucküberhitzer 19 resp. einem Hochdrucküberhitzer 23. Der Niederdruckverdampfer ist über eine Umwälzpumpe 18 mit einer Trommel 17 verbunden. In der Leitung zwischen Niederdruckeconomiser 15 und Trommel 17 ist ein Niederdruck-Speisewasserregelventil 54 angeordnet. Der Hochdruckverdampfer ist über eine Umwälzpumpe 27 mit einer Trommel 26 verbunden. In der Leitung zwischen Hochdruckeconomiser 21 und Trommel 26 ist ein Hochdruck-Speisewasserregelventil 53 angeordnet. Der überhitzte Niederdruckdampf wird über eine Niederdruck-Dampfleitung 28 in eine geeignete Stufe der Hochdruckturbine 9 oder - je nach Druckniveau - direkt in die Niederdruckturbine 10 überführt. Der überhitzte Hochdruckdampf wird über eine Frischdampfleitung 24 in die Hochdruckturbine 9 überführt.

Die Eintrittstemperatur in den Kessel, d.h. die Speisewassertemperatur, entspricht im gezeigten Fall der Kondensattemperatur, da kein dampfbeheizter Speisewasserbehälter/Entgaser vorgesehen ist. Mit Vorteil wird die Materialwahl für die sogenannten Vorwärmflächen des Dampferzeugers in erster Linie in Abhängigkeit der Kondensattemperatur bzw. der Speisewassertemperatur sowie in zweiter Linie in Abhängigkeit des Gasturbinen-Brennstoffes und insbesondere dessen Schwefelgehaltes getroffen, um Taupunktkorrosion vorzubeugen. Entscheidend für die Taupunktkorrosion ist nämlich die rauchgasseitige Metalltemperatur der Heizflächen; und diese Temperatur liegt im betrachteten Rohrabschnitt näher an der Wassertemperatur innerhalb des Rohres als an der Rauchgastemperatur ausserhalb des Rohres. Mit sinkender wasserseitiger Eintrittstemperatur einerseits und/oder zunehmendem Schwefelgehalt andererseits kann von einfachem Kohlenstoffstahl über niedriglegierten Stahl zu rostfreiem Stahl.übergegangen werden.

Gemäss der Erfindungsaufgabe soll nun die Dampfbildung im Economiser verhindert werden. Eine erste Lösung ist in der Zeichnung anhand des Hochdrucksystems gezeigt. Sie besteht darin, dass der Druck im Hochdruck-Economiser 21 über das wasserseitig vor dem Verdampfer 22 angeordnete Speisewasserregelventil 53 und die drehzahlgeregelte Hochdruckspeisepumpe 20 eingestellt wird. Das zu wählende System für die Drehzahlregelung kann beliebig sein, z.B. Anwendung eines mechanisch/hydraulischen Getriebes, eines Frequenzwandlers und dergleichen. Es sollte indes in der Lage sein, jederzeit bei Bedarf unverzüglich 100% des Massenstromes zu liefern. Hierzu wird man am einfachsten einen Druckabfall über das Speisewasserregelventil 53 sicherstellen und die Anpassung an die Betriebsbedingungen über eine Drehzahlveränderung der Hochdruckspeisepumpe 20 vornehmen.

Anhand eines Zahlenbeipiels sei dieser Vorgang kurz erläutert: Der Druck in der Trommel 26 wird mit 80 bar angenommen, was einer Siedetemperatur von 295°C entspricht. Der Druckabfall über das Speisewasserregelventil 53 sollte 10 bar betragen, wodurch der Druck vor Regelventil 90 bar mit entsprechender Siede temperatur von 303°C beträgt. Mit dieser Massnahme erzielt man somit einen Siedeabstand von ca. 8 K (Kelvin), was eine ausreichende Sicherheit gegen Dampfbildung gewährleistet.

Diese Massnahme ist selbstverständlich nicht auf die dargestellte Hochdruck-Anwendung beschränkt, sondern gilt grundsätzlich für alle Druckstufen. Es versteht sich, dass bei gegebenem Druckabfall, bspw. 10 bar, über dem Speisewasserregelventil bei höheren Drücken die Differenzen hinsichtlich der Siedetemperatur immer geringer werden. Im Niederdruckbereich hingegen erzielt man mit bereits weniger Druckabfall (z.B. 5 bar) beträchtlich grössere Sicherheitsabstände.

Vom Speisewasserregelventil hin in Richtung "kaltes Ende des Kessels", d.h zum Rauchgasaustritt resp. Speisewassereintritt werden die wasserseitigen Drücke immer höher und die rauchgasseitigen Temperaturen immer niedriger, so dass in diesem Bereich keine Gefahr der Dampfbildung besteht.

Selbstverständlich ist die Erfindung nicht auf die gezeigte und beschriebene Anlage beschränkt. Ihre Anwendung ist unabhängig vom Typ und der Bauweise der Dampfturbinenanlage, vom Kondensationssystem, vom Vorhandensein einer Zwischen überhitzung , von der Gasturbinenanlage sowie vom gewählten Anfahrprozess. Die beschriebene Lösung ist grundsätzlich auch bei Zwangsdurchlaufkesseln einsetzbar.

### Bezugszeichenliste

- 1: Leitung (angesaugte Frischluft)
- 2: Verdichter
- 3: Brennkammer
- 4: Gasturbine
- 5: Generator
- 6: Leitung (Abgas)
- 7: Abhitzedampferzeugungsanlage
- 8: Leitung (zum Kamin)
- 9: Hochdruckturbine
- 10: Niederdruckturbine
- 11: Kondensator
- 12: Hotwell
- 14: Speisewasserpumpe
- 15: Niederdruckeconomiser
- 15b: Austrittssammler von 15
- 16: Niederdruckverdampfer
- 17: Niederdrucktrommel
- 18: Umwälzpumpe
- 19: Niederdrucküberhitzer
- 20: drehzahlgeregelte Speisewasserpumpe
- 21: Hochdruckeconomiser
- 22: Hochdruckverdampfer
- 23: Hochdrucküberhitzer
- 24: Frischdampfleitung
- 26: Hochdrucktrommel
- 27: Umwälzpumpe
- 28: Niederdruck-Dampfleitung
- 49: Zuströmleitung
- 50: Bypassleitung
- 51: Absperrventil
- 52: Absperrventil
- 53: Hochdruck -Speisewasserregelventil
- 54: Niederdruck -Speisewasserregelventil

## Patentansprüche

1. Verfahren zum Betreiben eines Abhitzedampferzeugers einer kombinierten Gas-Dampf-Kraftwerksanlage mit einem Gasturbinenkreislauf und einem Dampfturbinenkreislauf, bei welcher Anlage die Abgase einer Gasturbine (4) ihre Restwärme über das im Dampferzeuger (7) strömende Arbeitsmittel, welches über eine Speisepumpe (14, 20) gefördert wird, an eine Dampfturbine (9, 10) abgeben, und wobei der Dampferzeuger (7) mindestens einen Economiser (15, 21), einen Verdampfer (16, 22) und eine Trommel (17;26) aufweist, und zur Verhinderung der Dampfbildung im Economiser (15, 21) der Druck im Economiser oberhalb des Sättigungsdruckes gehalten wird,
**dadurch gekennzeichnet, dass** der Druck im Economiser (21) mittels eines wasserseitig vor der Trommel (26) des Verdampfers (22) angeordneten Speisewasserregelventils (53) und einer drehzahlgeregelten Speisepumpe (20) eingestellt wird.

## Claims

1. Method of operating a waste-heat steam generator of a combined-cycle gas/steam power plant having a gas turbine circuit and a steam turbine circuit, in which plant the exhaust gases of a gas turbine (4) give off their residual heat to a steam turbine (9, 10) via the working medium which flows in the steam generator (7) and is delivered via a feed pump (14, 20), the steam generator (7) having at least one economizer (15, 21), at least one evaporator (16, 22) and at least one drum (17; 26), and the pressure in the economizer being kept above the saturation pressure in order to prevent the formation of steam in the economizer (15, 21), **characterized in that** the pressure in the economizer (21) is set by means of a feedwater control valve (53) arranged on the water side upstream of the drum (26) of the evaporator (22) and by means of a speed-controlled feed pump (20).

## Revendications

1. Procédé pour faire fonctionner un générateur de vapeur à chaleur perdue d'une centrale combinée gaz-vapeur avec un circuit de turbine à gaz et un circuit de turbine à vapeur, dans laquelle centrale les gaz d'échappement d'une turbine à gaz (4) cèdent leur chaleur résiduelle à une turbine à vapeur (9, 10) par l'intermédiaire du fluide de travail circulant dans le générateur de vapeur (7), lequel fluide de travail est refoulé par une pompe d'alimentation (14, 20), et dans laquelle le générateur de vapeur (7) présente au moins un économiseur (15, 21), un évaporateur (16, 22) et un tambour (17, 26), et, pour éviter la formation de vapeur dans l'économiseur (15, 21), la pression dans l'économiseur est maintenue au-dessus de la pression de saturation, **caractérisé en ce que** la pression dans l'économiseur (21) est ajustée au moyen d'une soupape de régulation d'eau d'alimentation (53) disposée du côté de l'eau avant le tambour (26) de l'évaporateur (22) et d'une pompe d'alimentation (20) à vitesse réglée.
